# EUROPEAN PATENT APPLICATION

(11) **EP 1 463 272 A1**
(43) Date of publication of application: **29.09.2004**
(21) Application number: 03006941.3
(22) Date of filing: 26.03.2003
(51) Int. Cl.: H04M 1/02

(54) **Clamshell-type mobile terminal with a better access to input keys**

(71) Applicant: Sony Ericsson Mobile Communications AB, 221 88 Lund (SE)
(72) Inventor: Kato, Kazuhiro Sony Ericsson Mobile Communications, 85609 Aschheim-Dornach (DE); Wada, Joe, Sony Ericsson Mobile Communications AB, 221 88 Lund (SE)
(74) Representative: Körber, Martin, Dipl.-Phys.

(57) **Abstract**

The present invention relates to a clamshell-type mobile terminal (1) for a wireless communication system , with a lower casing (2) comprising a keypad with input keys, an upper casing (3) comprising a display, a hinge means (4) connecting the lower (2) and the upper casing (3) so that the lower and the upper casing can be folded onto each other, whereby the hinge means (4) is located and arranged so that in an opened state, the lower casing (2) lies above the upper casing (3) enabling an easy access to input keys located close to the hinge means on the lower casing.

## Description

The present invention relates to a clamshell-type mobile terminal for a wireless telecommunication system, e.g. the UMTS, the GSM or any other wireless communication system.

Clamshell-type mobile terminals for wireless telecommunication systems are known in the art and popular with users who like the small volume of such mobile terminals when in the folded state. Clamshell-type mobile terminals usually comprise a lower casing comprising a key pad with input keys and an upper casing comprising a display, whereby the lower and upper casing are connected via hinge means. The hinge means enable the lower casing and the upper casing to unfold into an open or operation state and into a folded state, in which the upper and the lower casing are folded onto each other. In known clamshell-type mobile terminals, however, the upper and the lower casing in the unfolded or operational state are extending in almost the same plane, hereby limiting and rendering difficult the access to the input keys on the lower casing close to the hinge means. Generally, the upper casing and the lower casing of clamshell-type mobile terminals are of a flat shape, whereby the length and width extension is significantly larger than the depth or thickness of the casing. The middle plane of the length and the width extension, i.e. the plane more or less symmetrically separating the front and back side of the lower casing and the upper casing, respectively, are in the folded state of known mobile terminals parallel to each other. In the unfolded state, the upper and the lower casing extend in an angle of 140° and 180° in respect to each other. In known clamshell-type mobile terminals, the folding axis defined by the hinge means hereby extends in the middle plane of the lower casing as well as the upper casing so that, if the upper and lower casing are unfolded into an angle of 180°, both middle planes are laying in the same plane.

This known construction of clamshell-type mobile terminals has the disadvantage that input keys on the lower casing, e.g. navigation keys being located between the usual keypad with character/number input keys and the hinge means, are cumbersome to access by the thumb of the user. In other words, the maximum available keypad or input key area on the lower casing is limited by the construction of the hinge means. Further, the size and extension of inner components of the lower casing, such as a printed circuit board or the like, are limited by the construction of the hinge means.

The object of the present invention is therefore to provide a clamshell-type mobile terminal for a wireless communication system, with a lower casing comprising a keypad with input key, an upper casing comprising a display, and a hinge means connecting the lower and the upper casing so that the lower and the upper casing can be folded onto each other, which allows a maximum area of the lower casing to be used for input keys and particularly to place input keys very close to the hinge means.

The above object is achieved by a clamshell-type mobile terminal for a wireless communication system according to claim 1. The clamshell-type mobile terminal according to the present invention comprises a hinge means which is located and arranged so that in an opened or unfolded state, the lower casing lies above the upper casing enabling an easy access to input keys located close to the hinge means on the lower casing. Hereby, the lower casing does not lie on top or is folded on the upper casing, but is arranged in a plane above the plane of the upper casing assumed that the upper casing and the lower casing unfold to an angle of 180° between them. In other words, even if the clamshell-type mobile terminal opens into an angle of less than 180°, in reality, assumed that the upper casing and the lower casing, on the basis of the actual construction of the hinge means, were opened into a position where they include an angle of 180°, they would not lie in the same plane, but the lower casing would be located in a plane above the upper casing. The expression "above" hereby means in a plane distant from the display on the inside of the upper casing or skywards when the mobile terminal is held in a normal position in which the keypad and the inner display both face towards the sky.

Hereby, by providing a hinge means which allows the lower casing to be located above the upper casing in the unfolded state allows to very closely locate input keys nearby the hinge means on the lower casing. Thus, a user can easily access and operate these input keys with the thumb. Also, the hinge means according to the present invention allows the volume inside the lower casing to be effectively used thereby allowing more functional components to be placed inside the lower casing.

Advantageously, the rotation axis of the hinge means forming the centre of the folding movement between the lower and the upper casing lies in the middle plane of the lower casing. The middle plane of the lower casing is hereby, as explaneed above, the plane of the width and length extension of the lower casing in the middle between the keypad plane and the back plane of the lower casing. The hinge means only has one single rotation axis which is in the middle plane of the lower casing so that it can be said that the upper casing comprising the display folds or rotates around the lower casing. Advantageously, the hinge means comprise fixed means projecting from the display plane of the upper casing and rotating means movably connecting the lower casing to the fixed means. The fixed means projecting from the display plane are projecting away from (upwardly from) the display plane of the upper casing on a lower end thereof. Further advantageously, the fixed means and the lower casing respectively comprise through holes into and through which the rotating means extend.

The present invention is explaneed in more detail in the following description in relation to the enclosed drawings, in which
Fig. 1 shows a perspective view of a clamshell-type mobile terminal according to the present invention in an unfolded state,
Fig. 2 shows a perspective view of the clamshell-type mobile terminal of Fig. 1 in a folded or closed state,
Fig. 3 shows parts of the mobile terminal of Figs. 1 and 2 in an exploded view, and
Fig. 4 shows the parts of the mobile terminal shown in Fig. 3 in an assembled and perspective view.

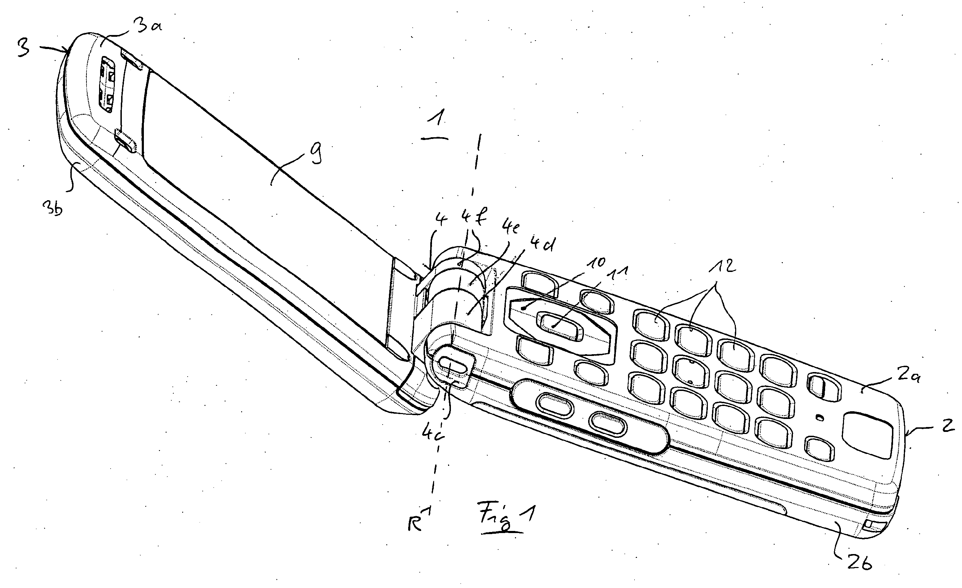

Fig. 1 shows a perspective view of a clamshell-type mobile terminal 1 for a wireless communication system according to the present invention. The wireless communication system may be any current or future communication system, such as the UMTS, GSM system or the like. Clamshell-type means that the mobile terminal 1 essentially comprises a lower casing 2 and an upper casing 3 connected by a hinge means 4. The lower casing 2 comprises a keypad with input keys 10, 11, 12. Input keys 12 are usually character/number input keys, whereby the input key 10 is a 4-way navigation key with a select key 11. The navigation key 10 allows to scroll vertically or horizontally through menus or icons displayed on a display 9 on the inner side of the upper casing 3. The lower casing 2 is thus the casing part, which, during inputting or operating the mobile terminal 1 is in the palm of the hand of a user, whereby the upper casing 3 is extending away from the hand of the user in the unfolded or open state. In the closed state, the upper casing 3 is folded onto the lower casing 2. The lower casing comprises an inner shell 2a with through holes for the input keys 10, 11, 12 and an outer shell 2b forming the back or outer side in the folded state of the mobile terminal 1. Likewise, the upper casing 3 comprises an inner shell 3a with a throughhole for the display 9 and an outer shell 3b forming the back or outer side in the folded state of the mobile terminal 1. Further, the lower casing 2 and the upper casing 3 comprise and contain all necessary elements for the operation of the mobile terminal 1, such as antenna, baseband processor and the like.

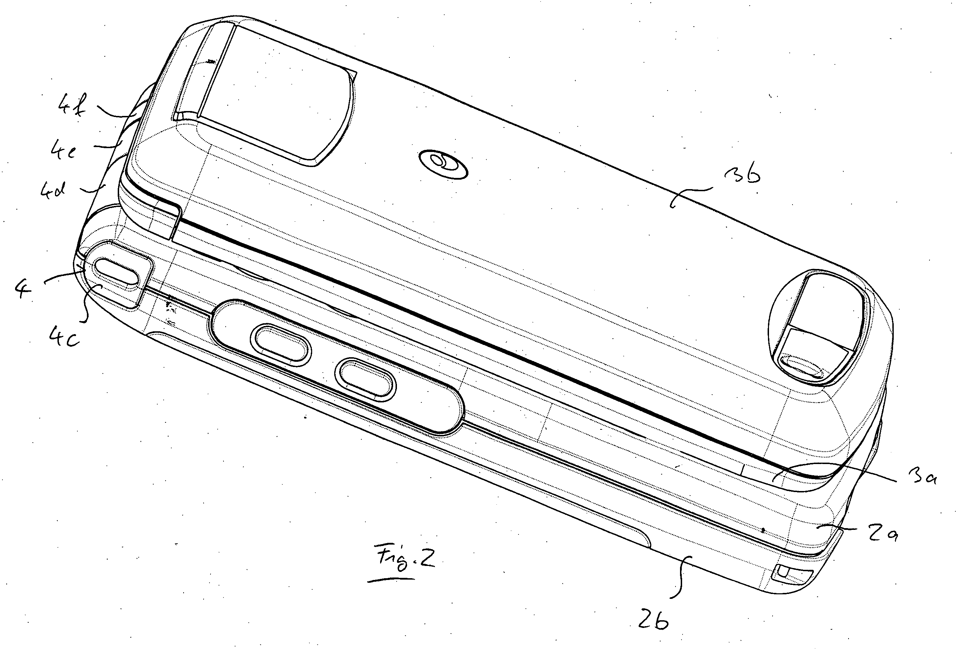

The lower casing 2 and the upper casing 3 are rotatably or foldably connected through a hinge means 4. The hinge means 4 allows the lower casing 2 and the upper casing 3 to be unfolded into an open or unfolded state, in which the lower casing 2 and the upper casing 3 extend in an angle of approximately 160° to each other. In the folded state, as shown in Fig. 2, the upper casing 3 and the lower casing 2 are folded onto each other with their respective inner shells 2a and 3a facing each other, so that the display 9 lies on the keypad, hereby protecting these elements.

As can be seen in Fig. 1, the hinge means 4 is located and arranged so that, when the mobile terminal 1 is in the open state, the lower casing 3 lies above the upper casing 2 enabling an easy access to the input keys 10, 11 located close to the hinge means 4 on the lower casing 3. In other words, the hinge means 4 does not form a smooth transition from the upper casing 3 to the lower casing 2, but forms a step whereby the upper end of the lower casing 2 lies on top or above the lower end of the upper casing 3. If the lower casing 2 and the upper casing 3 could be unfolded into an opening angle of 180°, the upper casing 3 and the lower casing 2 would lie in different planes. If, e.g. the separation plane between the inner shell 2a and the outer shell 2b and the separation plane between the inner shell 3a and the outer shell 3b could be considered as the middle planes of the lower casing 2 and the upper casing 3, respectively, both middle planes would - in the unfolded state - be in a different plane parallel but distant to each other. Hereby, the rotation axis R of the hinge means 4, i.e. the axis forming the centre of the rotation or folding movement between the lower casing 2 and the upper casing 3 lies in the middle plane of the lower casing 2 but not in the middle plane of the upper casing 3. In fact, the rotation axis R is located in the certain distance from the middle plane of the upper casing 3.

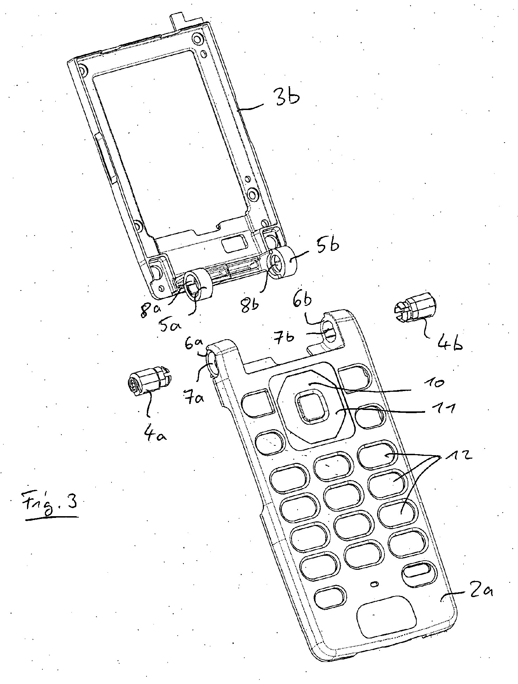

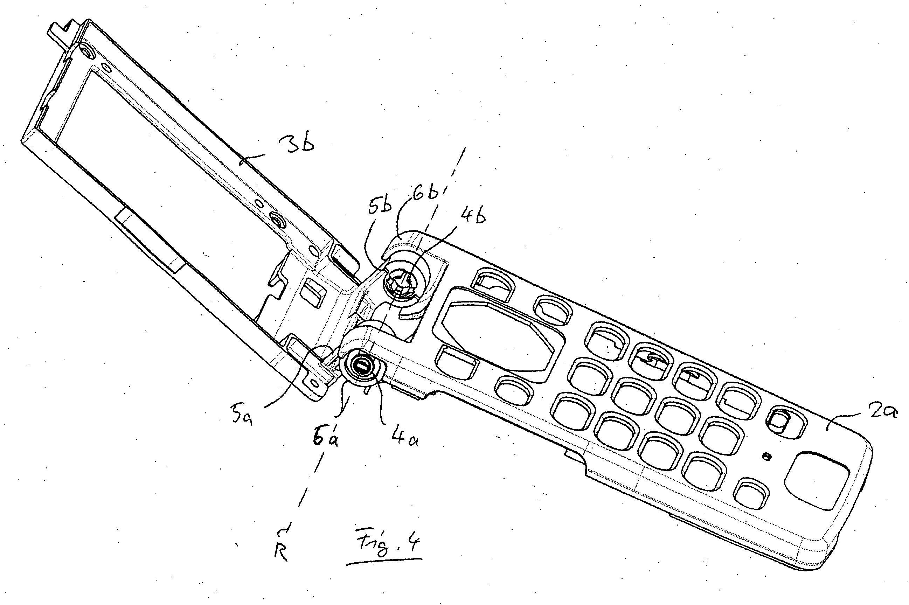

The specific construction of the hinge means 4 is shown in detail in Figs. 3 and 4. Fig. 3 shows an exploded view of the inner shell 2a of the lower casing 2 and the outer shell 3b of the upper casing 3. Fig. 4 shows a perspective view in which the parts are assembled.

The hinge means 4 comprises fixed means 5a and 5b being an integral part of the outer shell 3b of the upper casing 3 and extending or projecting from the plane of the display 9 upwardly. Both fixed means 5a and 5b have a ring-like form and respectively comprise a throughhole 8a and 8b. The inner shell 2a of the lower casing 2, at its upper end, comprises hinge members 6a and 6b having a ring-like form with a respective throughhole 7a and 7b. When assembling the inner shell 2a and the outer shell 3b, the ring-like member 6a is placed adjacent to the ring-like fixed means 5a and the ring-like member 6b is placed next to the ring-like fixed means 5b. A respective rotating means 4a and 4b with a cylindrical shape is inserted in the through holes 7a, 8a and 7b, 8b and fixed with a snap-in connection. Each rotating means 4a and 4b comprises two parts which are rotatable against each other. Thus, when the introducing rotation means 4a into the through holes 7a and 8a, one part of the rotation means 4a is fixed (non-rotatable) connected to the hinge element 6a and the other part of the rotation means 4a is fixed (non-rotatable) connected to the fixed means 8a. Likewise, one part of the rotation means 4a is non-rotatably connected to the hinge member 6b and the other part of the rotation means 4b is non-rotatably connected to the fixed means 5b.

The outer parts of the rotation means 4a and 4b are covered by corresponding hinge covers (one hinge cover 4c is shown in Figs. 1 and 2). Further, the space between the upper end of the lower casing 2 and the lower end of the upper casing 3 is covered with hinge covers 4d, 4e and 4f for better design.

## Claims

1. Clamshell-type mobile terminal (1) for a wireless communication system, with
a lower casing (2) comprising a keypad with input keys,
an upper casing (3) comprising a display,
a hinge means (4) connecting the lower (2) and the upper casing (3) so that the lower and the upper casing can be folded onto each other,
whereby the hinge means (4) is located and arranged so that in an opened state, the lower casing (2) lies above the upper casing (3) enabling an easy access to input keys located close to the hinge means on the lower casing.

2. Clamshell-type mobile terminal according to claim 1,
**characterised in,**
**that** the rotation axis (R) of the hinge means (4) forming the centre of the folding movement between the lower and the upper casing lies in the middle plane of the lower casing.

3. Clamshell-type mobile terminal according to claim 1 or 2,
**characterised in,**
**that** the hinge means (4) comprise fixed means (5a, 5b) projecting from the display plane of the upper casing (3) and rotating means (4a, 4b) movably connecting the lower casing to the fixed means.

4. Clamshell-type mobile terminal according to claim 3,
**characterised in,**
**that** the fixed means and the lower casing respectively comprise through holes into and through which the rotating means extend.
